# FASCICULE DE BREVET EUROPEEN

(11) **EP 2 139 008 B1**
(45) Date de publication et mention de la délivrance du brevet: **25.09.2013**
(21) Numéro de dépôt: 09163360.2
(22) Date de dépôt: 22.06.2009
(51) Int. Cl.: H01B 3/44

(54) **Cable d'énergie et/ou de télécommunication à glissement amélioré**
Strom- oder Telekomminkationskabel mit verbesserter Gleitfähigkeit
Energy or telecommunication cable having an improved shearing strain

(30) Priorité: 24.06.2008 FR 0854160
(43) Date de publication de la demande: 30.12.2009
(73) Titulaire: Nexans, 75008 Paris (FR)
(72) Inventeur: Pinto, Olivier, 69003 LYON (FR); Marty, Jean-Michel, 69110 SAINTE FOY LES LYON (FR)
(74) Mandataire: Peguet, Wilfried

(56) Documents cités:
- WO-A-2006/053740
- JP-A- 2000 302 923
- JP-A- 2002 146 112
- US-A- 4 935 262

## Description

La présente invention se rapporte à un câble d'énergie et/ou de télécommunication comportant au moins une couche isolante présentant un glissement de surface amélioré.

Elle s'applique typiquement, mais non exclusivement, aux domaines des câbles installés sur des engins mobiles tels que des grues ou des enrouleurs. Ces câbles sont également connus sous le nom de câbles de manutention et sont notamment voués à être enroulés et déroulés au cours du déplacement des engins mobiles auxquelles ils sont respectivement connectés. Ils sont généralement souples et présentent une flexibilité à même de leur conférer une certaine capacité de déplacement en cours d'utilisation. De plus, ils sont généralement multiconducteurs de manière à pouvoir assurer des fonctions d'alimentation électrique et/ou de transmission de signal, que ledit signal soit d'ailleurs d'origine électrique ou optique.

De façon générale, qu'il soit électrique ou optique, destiné au transport d'énergie ou à la transmission de données, un câble est schématiquement constitué d'au moins un élément conducteur, électrique ou optique, entouré par au moins une couche isolante. A titre d'exemple, la couche isolante peut être une isolation directement en contact avec un élément conducteur du câble. Elle peut être également une gaine de protection entourant un ou plusieurs éléments conducteurs isolés, notamment dans le cas des câbles de manutention.

Dans le domaine des câbles installés sur des engins mobiles, les gaines de protections desdits câbles sont sujettes à de nombreux frottements. Afin de limiter lesdits frottements, ces gaines sont typiquement obtenues à partir d'une composition polymérique extrudée comprenant un polymère thermoplastique et un agent dit « de rugosité » ou « matifiant ».

Toutefois, ces solutions de l'art antérieur présentent des inconvénients considérables dans le sens où elles limitent les températures de mise en oeuvre par extrusion dudit polymère thermoplastique : la rugosité de surface recherchée ne s'obtient que lorsque l'extrusion s'effectue à basse température, c'est-à-dire à une température sensiblement identique à celle de la température de fusion du polymère thermoplastique.

Or, des cadences de production élevées ne peuvent être atteintes sans une augmentation sensible de la température lors de la mise en oeuvre. Par conséquent, l'état de surface obtenu sur les gaines de protection est brillant et lisse avec une force de friction élevée, ce qui est préjudiciable à leur utilisation dans le domaine des applications d'engins mobiles.

Ainsi, les solutions actuelles ne permettent pas de garantir des niveaux de productivité satisfaisants pour les câbles de ce type d'applications.

L'objet de la présente invention est de pallier les inconvénients des solutions de l'état de la technique en offrant notamment une composition polymérique comprenant un nouvel agent de rugosité, destinée à être utilisée en câblerie à des températures élevées de mise en oeuvre de ladite composition, notamment lors de l'extrusion de ladite composition, tout en présentant de bonnes propriétés de glissement une fois ladite composition mise en forme.

La solution selon la présente invention est de proposer un câble d'énergie et/ou de télécommunication comportant un ou plusieurs éléments conducteurs, et une couche isolante entourant le ou les éléments conducteurs, caractérisé en ce que ladite couche isolante est obtenue à partir d'une composition polymérique comprenant un polyuréthane thermoplastique, et un polyéthylène à Ultra Haut Poids Moléculaire (PE-UHPM) en tant qu'agent de rugosité.

De préférence, la couche isolante est une gaine de protection. Plus particulièrement, le ou les éléments conducteurs sont des éléments conducteurs isolés, et la couche isolante entourant le ou les éléments conducteurs isolés est ladite gaine de protection.

L'agent de rugosité selon la présente invention permet d'apporter de façon surprenante un état de surface mat et rugueux dans la fabrication de la couche isolante dudit câble avec un niveau de productivité supérieur d'environ 50%. Notamment, la composition polymérique selon l'invention peut être extrudée à des températures supérieures à la température de fusion (état fondu) du polyuréthane thermoplastique de la composition, l'extrudat obtenu présentant à sa surface une force de friction relativement faible.

En outre, le polyuréthane thermoplastique (TPU) de la composition polymérique présente avantageusement de très bonnes propriétés :
- mécaniques, afin de pouvoir notamment résister aux importantes forces de traction que le câble de manutention subit au cours des déplacements de l'engin mobile auquel il est connecté ;
- élastomériques ou de flexibilité, pour pouvoir accompagner efficacement tout déplacement de l'engin mobile auquel il est associé et également garantir l'enroulement et le déroulement du câble de manutention lorsque ce dernier est plus spécifiquement utilisé en combinaison avec un ou plusieurs enrouleurs ; et
- d'endurance à la fatigue, étant donné que le câble de manutention supporte de nombreux déplacements au cours de la mise en oeuvre de l'engin mobile associé.

Les polyéthylènes à Ultra Haut Poids Moléculaire (PE-UHPM) sont des polymères constitués d'au moins environ 50 000 unités monomériques, de préférence d'au moins 100 000 unités monomériques.

Ils ont de préférence un point de fusion d'au moins 125°C, notamment allant de 130 à 135°C.

Le point de fusion est classiquement mesuré au pic de fusion dudit polymère par analyse calorimétrique différentielle (DSC) avec une rampe de température de 10°C/min.

De préférence, les PE-UHPM ont un poids moléculaire d'au moins 1 million de g/mol. Le poids moléculaire est déterminé en mesurant la viscosité intrinsèque dudit polyéthylène et en convertissant cette valeur à l'aide de la loi dite de Mark-Houwink bien connue de l'homme du métier.

Les PE-UHPM conservent ainsi un comportement élastique à l'état fondu en raison de leur viscosité extrêmement élevée eu égard à leur très haut poids moléculaire. Par conséquent, les PE-UHPM maintiennent leurs propriétés dimensionnelles intactes même à haute température, ou en d'autres termes, ils ne se déforment pas.

Plus particulièrement, les PE-UHPM sont des matériaux polymères qui se présentent sous forme de poudre pulvérulente dont le diamètre médian (D50) des particules est d'au plus 100 µm, et de préférence la granulométrie moyenne est comprise entre 20 et 60 µm, le diamètre médian étant mesuré typiquement par un granulomètre à diffusion laser.

Dans un mode de réalisation particulièrement préféré, la composition polymérique comprend au plus 10 % en poids de PE-UHPM, de préférence au plus 5 % en poids de PE-UHPM.

Cette limite supérieure présente l'avantage de garantir des propriétés mécaniques satisfaisantes de la couche isolante du câble selon l'invention telles qu'un allongement à la rupture et une résistance à la traction relativement élevés, tout en limitant avantageusement la quantité de PE-UHPM qui est un matériau onéreux.

La composition polymérique de l'invention, qui est notamment thermoplastique, peut être extrudée pour obtenir une couche extrudée.

Elle peut comprendre avantageusement au moins 50 parties en poids de polyuréthane thermoplastique pour 100 parties en poids de polymère dans la composition, de préférence au moins 80 parties en poids de polyuréthane thermoplastique pour 100 parties en poids de polymère dans la composition, et encore plus préférentiellement au moins 90 parties en poids de polyuréthane thermoplastique pour 100 parties en poids de polymère dans la composition.

La composition polymérique de l'invention peut bien entendu comprendre d'autres polymères thermoplastiques bien connus de l'homme du métier, notamment aptes à pouvoir être extrudé.

Les autres polymères thermoplastiques sont de préférence choisis parmi les polymères et copolymères d'éthylène ou de polypropylène, les polyamides, les polyesters, et les polychlorures de vinyle, ou un de leurs mélanges.

Dans un mode de réalisation particulier, la couche isolante du câble selon l'invention est non réticulée. De préférence, la composition polymérique ne comprend pas d'agent de réticulation.

D'autres caractéristiques et avantages de la présente invention apparaîtront à la lumière des exemples qui vont suivre, lesdits exemples étant donnés à titre illustratif et nullement limitatif.

### Exemples comparatifs

Afin de montrer les avantages de la couche isolante selon la présente invention, on compare les propriétés de rugosité de surface d'une couche isolante obtenue d'une part à partir d'une composition selon l'invention (Composition 1) et d'autre part à partir d'une composition dite de référence (Composition 2).

Les Compositions 1 et 2 sont détaillées dans le tableau 1 ci-dessous, les quantités mentionnées dans le tableau 1 étant exprimées en pourcentage en poids dans la composition.

**Tableau 1**

| | Composition 1 | Composition 2 |
|---|---|---|
| TPU | 98 | 100 |
| PE-UHPM | 2 | 0 |

L'origine des constituants des Compositions 1 et 2 est la suivante :
- TPU est un polyuréthane thermoplastique commercialisé par la société BASF Elastogran, sous la référence Elastollan 1185A10M; et
- PE-UHPM est de la poudre de polyéthylène à Ultra Haut Poids Moléculaire, commercialisé par la société Ticona sous la référence GUR 4150.

### Mode opératoire de préparation des couches isolantes

La Composition 1 du tableau 1 est préparée selon le protocole explicité comme suit :
- on introduit le polymère dans un mélangeur interne réglé à 30 tours par minute (tr/min), la consigne de température du mélangeur étant fixée à 170°C pendant toute la durée du mélange,
- une fois que le polymère à l'état fondu (la température de fusion du polyuréthane thermoplastique est d'environ 170°C), on introduit la poudre d'UHMWPE dans le mélangeur à 30 tr/min,
- on mélange la composition pendant environ 10 minutes à 30 tr/min, et
- on extrude la composition, à une température de 190°C, autour d'un ensemble de conducteurs électriques isolés pour former une gaine de protection GP1, et ainsi obtenir un câble électrique C1.

La Composition 2 est quant à elle directement extrudée sur le même type d'ensemble de conducteurs électriques isolés pour former une gaine de protection GP2, et ainsi obtenir un câble électrique C2.

L'épaisseur de la gaine de protection GP1 et GP2 est d'environ 1,5 mm, cette valeur n'étant nullement limitative.

### Caractérisations du glissement de surface

Le glissement ou glissant de surface des gaines de protection GP1 et GP2 des câbles électriques est évalué selon un protocole expérimental qui consiste à mesurer à l'aide d'un dynamomètre la force nécessaire pour initier et entretenir le mouvement d'un tronçon d'un mètre de câble A posé sur deux longueurs B et C.

Ainsi, un tronçon d'un mètre du câble électrique C1 est posé sur deux longueurs du même câble électrique C1, et un tronçon d'un mètre du câble électrique C2 est posé sur deux longueurs du même câble électrique C2.

Plus la force ainsi mesurée, c'est-à-dire la force de friction, est faible, plus la gaine de protection dudit câble électrique est indiqué pour des applications d'alimentation d'engins mobiles de type grues, enrouleurs, etc.

Le tableau 2 rassemble les résultats des tests de force de friction réalisés sur les gaines de protections GP1 et GP2 des câbles électrique respectifs C1 et C2.

**Tableau 2**

| | GP1 | GP2 |
|---|---|---|
| Aspect visuel | Mat et rugueux | Lisse et brillant |
| Force de friction (DaN) | 2,3 | 4,7 |

Il ressort clairement des résultats du tableau 2 que la force de friction mesurée avec la gaine de protection GP1 obtenue conformément à la présente invention est environ 50% plus faible que celle mesurée avec la gaine de protection GP2 obtenue avec la Composition 2 dite de référence.

## Revendications

1. Câble d'énergie et/ou de télécommunication comportant un ou plusieurs éléments conducteurs, et une couche isolante entourant le ou les éléments conducteurs, **caractérisé en ce que** ladite couche isolante est obtenue à partir d'une composition polymérique comprenant un polyuréthane thermoplastique, et un polyéthylène à Ultra Haut Poids Moléculaire (PE-UHPM) en tant qu'agent de rugosité.

2. Câble selon la revendication 1, **caractérisé en ce que** le ou les éléments conducteurs sont des éléments conducteurs isolés, et **en ce que** la couche isolante entourant le ou les éléments conducteurs isolés est une gaine de protection.

3. Câble selon la revendication 1 ou 2, **caractérisé en ce que** le PE-UHPM a une température de fusion d'au moins 125°C.

4. Câble selon l'une quelconque des revendications précédentes, **caractérisé en ce que** le PE-UHPM a un poids moléculaire d'au moins 1 million de g/mole.

5. Câble selon l'une quelconque des revendications précédentes, **caractérisé en ce que** le PE-UHPM est sous forme de poudre dont le diamètre médian (D50) des particules est d'au plus 100 µm.

6. Câble selon l'une quelconque des revendications précédentes, **caractérisé en ce que** la composition polymérique comprend au plus 10 % en poids de PE-UHPM, de préférence au plus 5 % en poids de PE-UHPM.

7. Câble selon l'une quelconque des revendications précédentes, **caractérisé en ce que** la couche isolante est une couche extrudée.

8. Câble selon l'une quelconque des revendications précédentes, **caractérisé en ce que** la composition polymérique comprend au moins 50 parties en poids de polyuréthane thermoplastique pour 100 parties en poids de polymère dans la composition.

9. Câble selon l'une quelconque des revendications précédentes, **caractérisé en ce que** la composition polymérique ne comprend pas d'agent de réticulation.

10. Câble selon l'une quelconque des revendications précédentes, **caractérisé en ce que** la couche isolante est non réticulée.

## Patentansprüche

1. Strom- und/oder Telekommunikationskabel, das ein oder mehrere leitende Elemente aufweist und eine Isolierschicht, die das oder die leitenden Elemente umschließt, **dadurch gekennzeichnet, dass** die Isolierschicht aus einer Polymerzusammensetzung hergestellt ist, die ein thermoplastisches Polyurethan und ein Polyethylen mit ultrahohem Molekulargewicht (UHMW-PE) als Rauheitsmittel umfasst.

2. Kabel nach Anspruch 1, **dadurch gekennzeichnet, dass** das oder die leitenden Elemente isolierte leitende Elemente sind und dass die Isolierschicht, die das oder die leitenden Elemente umschließt, eine Schutzhülle ist.

3. Kabel nach Anspruch 1 oder 2, **dadurch gekennzeichnet, dass** das UHMW-PE eine Schmelztemperatur von mindestens 125 °C hat.

4. Kabel nach einem der vorangehenden Ansprüche, **dadurch gekennzeichnet, dass** das UHMW-PE ein Molekulargewicht von mindestens 1 Mio. g/mol hat.

5. Kabel nach einem der vorangehenden Ansprüche, **dadurch gekennzeichnet, dass** das UHMW-PE in Pulverform ist, dessen mittlerer Partikeldurchmesser (D50) höchstens 100 µm beträgt.

6. Kabel nach einem der vorangehenden Ansprüche, **dadurch gekennzeichnet, dass** die Polymerzusammensetzung höchstens 10 Gew.-% UHMW-PE, vorzugsweise höchstens 5 Gew.-% UHMW-PE, umfasst.

7. Kabel nach einem der vorangehenden Ansprüche, **dadurch gekennzeichnet, dass** die Isolierschicht eine extrudierte Schicht ist.

8. Kabel nach einem der vorangehenden Ansprüche, **dadurch gekennzeichnet, dass** die Polymerzusammensetzung mindestens 50 Gewichtsanteile thermoplastisches Polyurethan auf 100 Gewichtsanteile Polymer in der Zusammensetzung umfasst.

9. Kabel nach einem der vorangehenden Ansprüche, **dadurch gekennzeichnet, dass** die Polymerzusammensetzung kein Vernetzungsmittel umfasst.

10. Kabel nach einem der vorangehenden Ansprüche, **dadurch gekennzeichnet, dass** die Isolierschicht nicht vernetzt ist.

## Claims

1. A power and/or telecommunications cable including a one or more conductive elements, and an insulating layer surrounding the conductive element(s), **characterized in that** said insulating layer is obtained from a polymeric composition comprising a thermoplastic polyurethane, and an ultra high molecular weight polyethylene (UHMWPE) as a roughness agent.

2. The cable according to claim 1, **characterized in that** the conductive element(s) is (are) insulated conductive elements, and **in that** the insulating layer surrounding the insulated conductive element(s) is a protective sheath.

3. The cable according to claim 1 or 2, **characterized in that** the UHMWPE has a melting temperature of at least 125°C.

4. The cable according to any of the preceding claims, **characterized in that** the UHMWPE has a molecular weight of at least 1 million g/mol.

5. The cable according to any of the preceding claims, **characterized in that** the UHMWPE is in the form of a powder, the median particle diameter (D50) of which is at most 100 µm.

6. The cable according to any of the preceding claims, **characterized in that** the polymeric composition comprises at most 10% by weight of UHMWPE, preferably at most 5% by weight of UHMWPE.

7. The cable according to any of the preceding claims, **characterized in that** the insulating layer is an extruded layer.

8. The cable according to any of the preceding claims, **characterized in that** the polymeric composition comprises at least 50 parts by weight of thermoplastic polyurethane for 100 parts by weight of polymer in the composition.

9. The cable according to any of the preceding claims, **characterized in that** the polymeric composition does not comprise any cross-linking agent.

10. The cable according to any of the preceding claims, **characterized in that** the insulating layer is non-crosslinked.
